**Europäisches Patentamt**

**European Patent Office**

**Office européen des brevets**

(11) Veröffentlichungsnummer: **0 224 633**
A2

(12) # EUROPÄISCHE PATENTANMELDUNG

(21) Anmeldenummer: **86106220.6**

(22) Anmeldetag: **06.05.86**

(51) Int. Cl.⁴: **B 60 R 25/02**

(30) Priorität: **04.12.85 DE 3542792**

(43) Veröffentlichungstag der Anmeldung:
**10.06.87 Patentblatt 87/24**

(84) Benannte Vertragsstaaten:
**DE FR GB IT SE**

(71) Anmelder: **Schaltbau Gesellschaft mbH**
**Klausenburger Strasse 6**
**D-8000 München 80(DE)**

(72) Erfinder: **Junck, Rainer, Dipl.-Ing.**
**Lilienberg 4**
**D-8000 München 80(DE)**

(74) Vertreter: **Patentanwälte Grünecker, Kinkeldey,**
**Stockmair & Partner**
**Maximilianstrasse 58**
**D-8000 München 22(DE)**

(54) **Schlüsselschalter für Kraftfahrzeuge.**

(57) Zur Vermeidung der Entladung von Kraftfahrzeugbatterien durch unbeabsichtigtes Einschalten von Park- oder Standlicht ist im Schlüsselschalter eine gegen den Drehsinn der Anlasserstellung über die Nullstellung hinaus ein weiterer verriegelbarer Tastschalter vorgesehen, mit dem Park- oder Standlicht gesondert eingeschaltet werden müssen und der beim nächsten Starten wieder gelöst wird.

EP 0 224 633 A2

Schaltbau Gesellschaft mbH
München

SB 243
2. Dez. 1985

## Schlüsselschalter für Kraftfahrzeuge

Die Erfindung bezieht sich auf einen Schlüsselschalter
für Kraftfahrzeuge in welchem der Zündschlüssel aus der
Nullstellung in einem ersten Drehsinn über ein oder
mehrere Zwischenstellungen in die als Tastschalter ausgebildete Anlaßstellung für den Magnetschalter gedreht
werden kann.

Bei Kraftfahrzeugen, die mit Schlüsselschaltern der eingangs beschriebenen Art ausgestattet sind besteht die
Gefahr, daß beim Abziehen des Zündschlüssels in der
Nullstellung entweder das Standlicht oder die Parkbeleuchtung brennen bleibt. Vergißt der Fahrer beim Abstellen des Motors auch den Hauptlichtschalter abzuschalten, so schaltet die Beleuchtung selbsttätig auf
Standlicht um. Dies geschieht besonders leicht, wenn
aus der Dunkelheit in die Tageshelle gefahren wird oder
wenn bei Tage Gebiete mit Dunst oder Nebel durchfahren
werden mußten. Andererseits passiert es, daß bei Betätigung des Fahrtrichtungsschalters, zum Beispiel beim
Einparken in eine schräg zur Fahrbahn verlaufende Parklücke, die Lenkung nicht so weit zurückgedreht wird, daß
der Fahrtrichtungsschalter selbsttätig zurückgestellt
wird. Andererseits besteht die zwingende Vorschrift, daß
auch abgestellte Fahrzeuge beleuchtbar bleiben müssen.

Der Erfindung liegt die Aufgabe zugrunde, ein Mittel anzugeben mit dem die Beleuchtung des abgestellten Fahrzeuges
durch Standlicht oder Parklicht nicht versehentlich vorgenommen werden kann, wie im vorigen Absatz beschrieben
sondern bewußt herbeigeführt werden muß mit dem Zweck,
ein Entladen der Batterie zu vermeiden.

Diese Aufgabe wird erfindungsgemäß dadurch gelöst, daß
in dem Schlüsselschalter im Gegendrehsinn aus der Nullstellung ein weiterer durch Federkraft rückstellbarer
Tastschalter für das Standlicht und Parklicht vorhanden
ist, der nach Zurücklegen eines größeren Teiles des Drehweges im Gegendrehsinn mechanisch verriegelt und bei
Drehen des Zündschlüssels im ersten Drehsinn über eine
Zwischenstellung hinaus entriegelt und durch die Federkraft geöffnet wird.

Der besondere Vorteil des erfindungsgemäßen Schlüsselschalters ist darin zu sehen, daß Parklicht oder Standlicht nicht beim Stillsetzen des Fahrzeuges selbsttätig
eingeschaltet bleiben können weil der Fahrer vergißt,
den Hauptlichtschalter zu öffnen oder den Fahrtrichtungsschalter auf die Mittelstellung zu bringen. Es bedarf
vielmehr eines bewußten Einschaltens dieser Sicherheitsbeleuchtungen, das aber bei der nächsten Inbetriebnahme
des Fahrzeuges selbsttätig rückgängig gemacht wird.

Um zu vermeiden, daß bei allzu schwungvollem Zurückdrehen
des Zündschlüssels aus der Fahrtstellung in die Nullstellung der Schlüssel zu weit gedreht wird, ist in Weiterbildung der Erfindung für das Drehen des Zündschlüssels im Gegendrehsinn beim Überschreiten der
Nullstellung ein spürbares aber überwindbares Drehhindernis, zum Beispiel in Form einer Rast vorgesehen.

Bei der Betätigung der Parkleuchte wird in an sich bekannter Weise die beim Parken zu beleuchtende Fahrzeugseite durch den Fahrtrichtungsschalter bestimmt.

Schaltbau Gesellschaft mbH
   München

SB 243
2. Dez. 1985

Patentansprüche

1. Schlüsselschalter für Kraftfahrzeuge in welchem der
Zündschlüssel aus der Nullstellung in einem ersten
Drehsinn über ein oder mehrere Zwischenstellungen
in die als Tastschalter ausgebildete Anlaßstellung
für den Magnetschalter gedreht werden kann, dadurch
gekennzeichnet, daß im Gegendrehsinn aus der Nullstellung ein weiterer durch Federkraft rückstellbarer Tastschalter für das Standlicht und Parklicht
vorhanden ist, der nach Zurücklegen eines größeren
Teiles des Drehweges im Gegendrehsinn mechanisch verriegelt und beim Drehen des Zündschlüssels im ersten
Drehsinn über eine Zwischenstellung hinaus entriegelt
und durch die Federkraft geöffnet wird.

2. Schlüsselschalter nach Anspruch 1, <u>dadurch gekenn-</u><u>zeichnet</u>, daß beim Überschreiten der Nullstellung beim Drehen des Zündschlüssels im Gegendrehsinn ein spürbares aber überwindbares Drehhindernis, zum Beispiel in Form einer Rast, vorgesehen ist.

3. Schlüsselschalter nach Anspruch 1 oder 2, <u>dadurch</u> <u>gekennzeichnet</u>, daß in an sich bekannter Weise die beim Parken zu beleuchtende Fahrzeugseite durch den Fahrtrichtungsschalter bestimmt wird.